## Europäisches Patentamt

## European Patent Office

## Office européen des brevets

(19)

(11) Veröffentlichungsnummer: **0 033 061**
**B1**

(12) # EUROPÄISCHE PATENTSCHRIFT

(45) Veröffentlichungstag der Patentschrift:
21.11.84

(51) Int. Cl.³: **H 01 M 4/22**

(21) Anmeldenummer: **80890149.0**

(22) Anmeldetag: **16.12.80**

(54) Formationsgefäss für die Bleiplatten von Akkumulatoren.

(30) Priorität: **23.01.80 AT 344/80**

(43) Veröffentlichungstag der Anmeldung:
**05.08.81 Patentblatt 81/31**

(45) Bekanntmachung des Hinweises auf die Patenterteilung:
**21.11.84 Patentblatt 84/47**

(84) Benannte Vertragsstaaten:
**AT CH DE FR GB IT LI**

(56) Entgegenhaltungen:
**DE - A - 2 456 943**
**DE - A - 2 718 246**
**DE - B - 1 283 311**
**GB - A - 1 430 192**

(73) Patentinhaber: **Semperit Aktiengesellschaft,**
**Modecenterstrasse 22, A-1031 Wien (AT)**

(72) Erfinder: **Furtner, Josef, Dr. Hittmayrstrasse 14,**
**A-4470 Enns (AT)**

**Beschreibung**

Die vorliegende Erfindung betrifft ein Formationsgefäß für die Bleiplatten von Akkumulatoren, bei dem die Bleiplatten von Rippenplatten, die sich in senkrechten Nuten von Seitenwänden abstützen, gehalten sind.

Gemäß dem Stand der Technik ist es bekannt, Hartgummi oder Kunststoffbehälter als Formationsgefäße zu verwenden. An zwei gegenüberliegenden Innenseiten der Seitenwände sind senkrechte Nuten vorgesehen, die zur Aufnahme von Rippenplatten dienen. Diese Rippenplatten weisen ihrerseits wiederum senkrechte Nuten auf, in die die Bleiplatten eingesteckt werden. Bei der Formierung werden die mit einer bleioxidhaltigen Paste präparierten Platten in einem Schwefelsäureelektrolyten einerseits zur positiven, bleioxidhaltigen Platte oxidiert und andererseits zur negativen Bleiplatte reduziert. Um Bleiplatten verschiedener Größe in einem Formationsgefäß formieren zu können, kann der Abstand der Rippenplatten variiert werden.

Derartige Ausführungen weisen jedoch den Nachteil auf, daß eine Variation des Abstandes der Rippenplatten nur für die gängigsten Bleiplattengrößen und unter Zuhilfenahme von zusätzlichen Einsteckteilen zur Fixierung der Rippenplatten möglich ist. Gerade diese zusätzlichen Einsteckteile erschweren die Manipulation sehr und beeinträchtigen den Vorteil, der durch die Verwendbarkeit desselben für verschiedene Bleiplatten an und für sich gegeben ist.

Eine derartige Ausführungsform ist beispielsweise in der DE-AS 1 283 311 gezeigt. Dieses Formationsgefäß ist mit einem herausnehmbaren Einsatz versehen, der aus mehreren Rippenplatten besteht, die beidseitig mit schwalbenschwanzförmigen Ausnehmungen zur Aufnahme von gegengleich ausgebildeten Führungsleisten versehen sind. Der Abstand zwischen den einzelnen Rippenplatten ist durch aufsetzbare Abstandsstücke variierbar. Um eine Änderung des Abstandes der Rippenplatten voneinander vorzunehmen, ist eine Manipulation mit den Abstandsstücken erforderlich.

Ähnliche Verhältnisse liegen bei dem in der GB-OS 1 430 192 gezeigten Formationskasten vor. Bei dieser Ausführungsform sind die Rippenplatten auf Stangen aufgeschoben, zwischen den Rippenplatten befinden sich auf den Stangen Abstandshalter, die freien Enden der Stangen sind mit Schraubenmuttern gesichert.

Die Erfindung hat sich daher die Aufgabe gestellt, hier Abhilfe zu schaffen und ein Formationsgefäß der eingangs genannten Art zu gestalten, in welchem möglichst alle derzeit am Markt befindlichen Bleiplattengrößen mit geringstem Manipulationsaufwand formiert werden können.

Gelöst wird die gestellte Aufgabe erfindungsgemäß dadurch, daß die Nuten zur Aufnahme der Rippenplatten in solchen unterschiedlichen Abständen voneinander vorgesehen sind, daß Bleiplatten verschiedener Größe durch Variation des Abstandes der Rippenplatten voneinander durch diese gehalten werden können.

Durch diese Ausgestaltung ist zum Ändern des Abstandes der Rippenplatten lediglich erforderlich, diese in die entsprechenden Nuten der Seitenwände einzusetzen. Hierbei wird der Abstand der Nuten vorteilhafterweise so gewählt werden, daß für möglicht jede vorhandene Bleiplattengröße zumindest ein Nutenpaar in jeder Seitenwand ausgebildet ist, in das die Rippenplatten, die dann die Bleiplatten aufnehmen, eingesteckt werden können.

Eine besonders zweckmäßige Anordnung derartiger Formationsgefäße liegt dann vor, wenn diese in zwei Reihen nebeneinander angeordnet und mittels Kunststoffprofilen an den Außenseiten der Reihen und zwischen ihnen fixiert sind. Dadurch wird nicht nur die Lage der Formationsgefäße definiert, sondern es wird durch die Kunststoffprofile auch zusätzlich der Deformationsneigung der Seitenwände entgegengewirkt, da die Kunststoffprofile infolge ihrer entsprechend starren Ausführung eine Ausbauchung der Seitenwände nicht zulassen.

Im folgenden wird die Erfindung anhand der Zeichnung beispielhaft näher erläutert. Es zeigt die

Fig. 1 einen Querschnitt einer Schrägansicht,

Fig. 2 einen Querschnitt in Draufsicht,

Fig. 3 einen Querschnitt in Seitenansicht und

Fig. 4 eine schematische Anordnung von mehreren erfindungsgemäßen Formationsgefäßen.

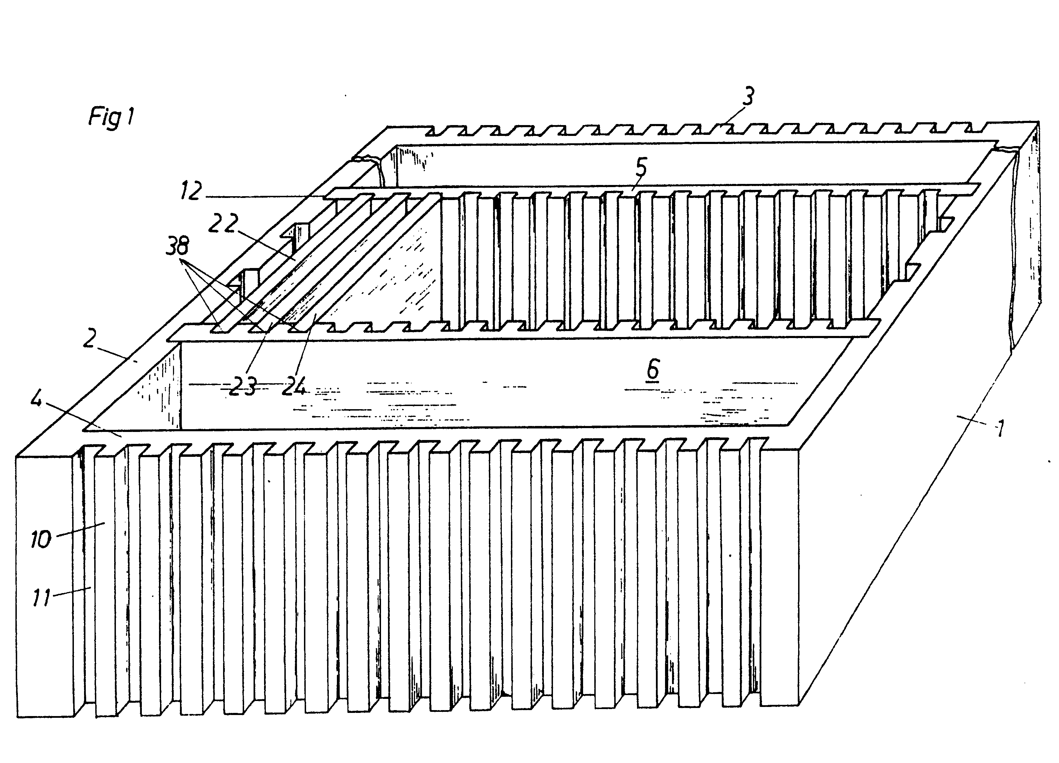

Das in Fig. 1 dargestellte Formationsgefäß weist Seitenwände 1 bis 4 auf. Die Seitenwände 1, 2 sind außen glatt und weisen innen Nuten 12 bis 21 zur Aufnahme der Rippenplatten 5 bis 9 auf. In den Rippenplatten 5 bis 9 sind senkrechte Nuten 38 zur Aufnahme der Bleiplatten 22 bis 24 ausgebildet.

An den Längsseitenwänden 3, 4 sind außen Rippen 10 und Rillen 11 ausgebildet, die senkrecht verlaufen und im wesentlichen quadratischen Querschnitt besitzen. Die Kantenlänge der Quadrate kann dabei etwa 5 mm betragen und entspricht somit der bei den Rillen 11 verbleibenden Wandstärke der Seitenwände 3, 4.

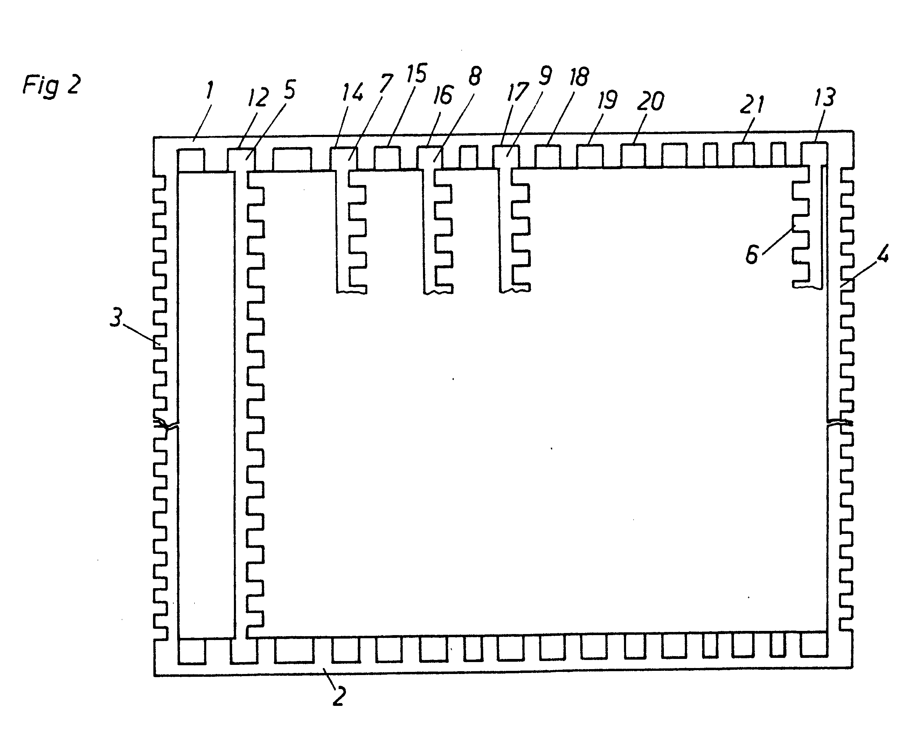

Der Fig. 2 kann entnommen werden, daß die Rippenplatten 5 bis 9 in den Nuten 12 bis 21 verschieden angeordnet werden können, so daß der Abstand zwischen zwei zur Aufnahme der Bleiplatten dienenden Rippenplatten variiert werden kann.

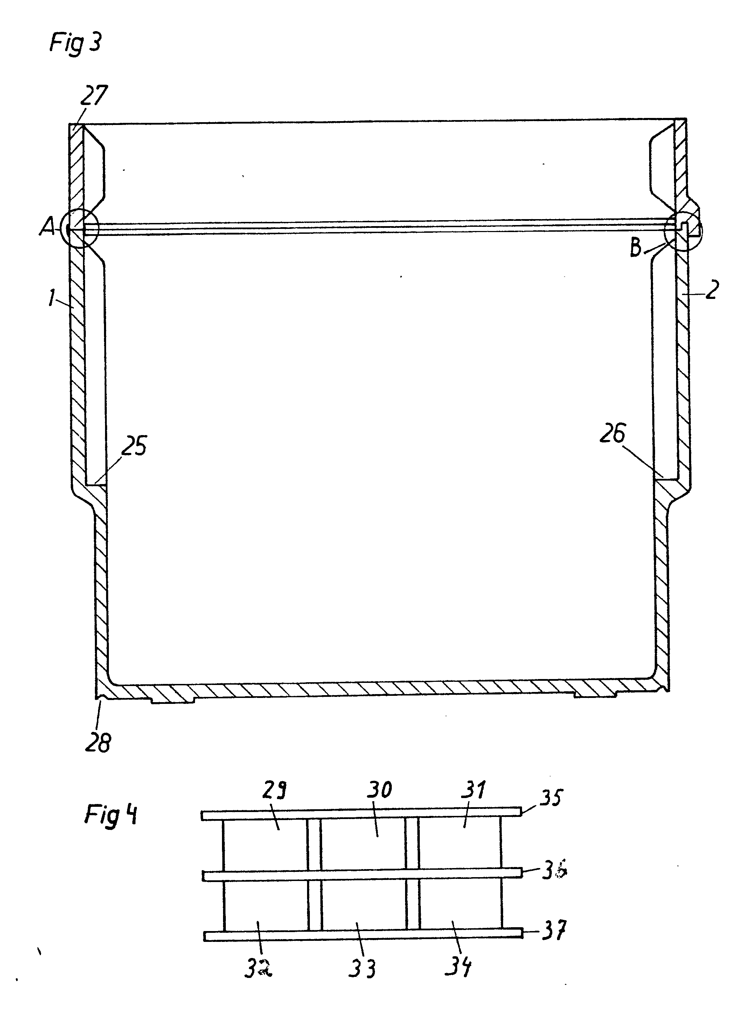

Fig. 3 zeigt einen Querschnitt durch eine Seitenansicht des Formationsgefäßes, wobei erkennbar ist, daß die Nuten 12 bis 21 zur Aufnahme der Rippenplatten 5 bis 9 nicht bis zum Boden des Formationsgefäßes, sondern nur bis zu Absätzen 25, 26 reichen. Der darunterliegende Freiraum dient zur Aufnahme einer größeren Elektrolytmenge und verhindert außerdem eine Kurzschlußbildung durch zu Boden sinkenden leitfähigen Bleischlamm. Um die Verwendbarkeit des erfindungsgemäßen Formationsgefäßes auch für hohe Bleiplatten zu adaptieren, ist es zweckmäßig, wie in Fig. 3 dargestellt, wenn die Höhe des Formationsgefäßes durch den Aufsatz 27 erhöht werden kann. Dadurch, daß das Formationsgefäß und der Aufsatz 27 aus Kunststoff besteht, kann wie gemäß A dargestellt, die Verbindung mit dem Aufsatz 27 durch einfaches Spiegelverschweißen durchgeführt werden. Die Verbindung kann jedoch auch wie bei B dargestellt, durch Verklebung vorgenommen werden. Um eine sichere Klebeverbindung zu erzielen, besitzt in diesem Falle die Seitenwand 2 einen abgestuften Rand, auf den der gegengleich ausgebildete Rand des Aufsatzes 27 aufsetzbar ist. Um eine Verschmutzung und Korrosion der die Formationsgefäße tragenden Tragkonstruktion durch von der Außenseite der Formationsgefäße abrinnendes Kondenswasser sowie allenfalls Säurereste zu verhindern, weist das Formationsgefäß unten einen als Tropfnase 28 ausgebildeten Rand auf. Dadurch ist auch die Ausbildung von Kriechströmen über die leitende Tragkonstruktion verhindert.

In Fig. 4 ist schematisch die Anordnung zweier Reihen von Formationsgefäßen 29 bis 34 dargestellt, die durch Kunststoffprofile 35, 36, 37 zusammengehalten sind. Die Kunststoffprofile können als hohle Rechteckprofile ausgebildet sein.

## Patentansprüche

1. Formationsgefäß für die Bleiplatten von Akkumulatoren, bei dem die Bleiplatten von Rippenplatten (12 bis 21), die sich in senkrechten Nuten (5 bis 9) von Seitenwänden abstützen, gehalten sind, dadurch gekennzeichnet, daß die Nuten (12 bis 21) zur Aufnahme der Rippenplatten (5 bis 9) in solchen unterschiedlichen Abständen voneinander vorgesehen sind, daß Bleiplatten verschiedener Größen durch Variation des Abstandes der Rippenplatten (5 bis 9) voneinander durch diese gehalten werden können.

2. Anordnung von Formationsgefäßen nach Anspruch 1, dadurch gekennzeichnet, daß sie in zwei Reihen nebeneinander angeordnet und mittels Kunststoffprofilen (35 bis 37) an den Außenseiten (3) und zwischen ihnen fixiert sind.

## Claims

1. A forming vessel for the lead accumulator plates, in which the lead plates are held by ribbed plates (12 to 21) which themselves are supported in vertical grooves (5 to 9) in side walls, characterised in that the grooves (5 to 9) for the accommodation of the ribbed plates (5 to 9), are provided at such different spacings from one another that lead plates of different sizes can be held by the ribbed plates by varying the spacing of the ribbed plates (5 to 9) from one another.

2. An arrangement of forming vessels according to claim 1, characterised in that they are arranged side by side in two rows and are fixed at the outer sides (3), and between them by means of plastics profiled sections (35 to 37).

## Revendications

1. Récipient de formation d'électrodes d'accumulateurs au plomb dans lequel les plaques de plomb sont retenues par des plaques nervurées (12 à 21) s'appuyant dans des rainures verticales (5 à 9) des parois latérales, caractérisé en ce que les rainures (12 à 21) sont prévues en vue de la réception des plaques de plomb (5 à 9) à des distances variables les unes des autres et telles que des plaques de plomb de dimensions diverses puissent être maintenues dans ces dernières en modifiant la distance séparant les plaques nervurées (5 à 9) les unes des autres.

2. Agencement de récipients de formation selon la revendication 1, caractérisé en ce qu'il sont disposés en deux rangées côte à côte et fixés au moyen de profilés en matière synthétique (35 à 37) sur leurs côtés externes (3) et entre eux.

Fig 1

0 033 061

Fig 2

0 033 061

*Fig 3*

*Fig 4*